# EUROPEAN PATENT APPLICATION

(11) **EP 4 613 589 A1**
(43) Date of publication of application: **10.09.2025**
(21) Application number: 23890202.7
(22) Date of filing: 29.06.2023
(51) Int. Cl.: B60W 30/06

(54) **PARKING METHOD AND APPARATUS**

(30) Priority: 16.11.2022 CN 202211436898
(71) Applicant: Shenzhen Yinwang Intelligent Technologies Co., Ltd., Shenzhen, Guangdong 518129 (CN)
(72) Inventor: WEI, Xiongan, Shenzhen, Guangdong 518129 (CN); JIANG, Chao, Shenzhen, Guangdong 518129 (CN)
(74) Representative: MERH-IP Matias Erny Reichl Hoffmann Patentanwälte PartG mbB
(86) International application number: PCT/CN2023/103884
(87) International publication number: WO 2024/103760

(57) **Abstract**

This application relates to a parking method and apparatus. The method includes: determining first information, where the first information includes information associated with a first temporary parking space, and the information associated with the first temporary parking space includes at least one of the following: a first temporary parking point, the first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and sending the first information to the first vehicle. According to the parking method and apparatus provided in embodiments of this application, parking efficiency can be improved.

## Description

This application claims priority to Chinese Patent Application No. 202211436898.8, filed with the China National Intellectual Property Administration on November 16, 2022 and entitled "PARKING METHOD AND APPARATUS", which is incorporated herein by reference in its entirety.

### TECHNICAL FIELD

This application relates to the field of intelligent driving technologies, and in particular, to a parking method and apparatus.

### BACKGROUND

In an automated valet parking (Automated Valet Parking, AVP) scenario, a vehicle may automatically plan a path to a destination parking space based on a high-definition map and a sensed ambient environment. However, in some scenarios with great condition limitations, in an automated valet parking process, a vehicle needs to repeatedly attempt to obtain a feasible path. A plurality of attempts affect parking efficiency, and may even cause a parking failure. For example, in a mine scenario, when a vehicle is in a soil loading area, due to complex road conditions, geographic information and dynamic information on a road cannot be well identified through sensing, and collected spatial information usually cannot meet a traveling requirement of the vehicle. As a result, automated valet parking fails, and vehicle operation efficiency is low. Therefore, how to improve efficiency of automated valet parking becomes an urgent problem to be resolved currently.

### SUMMARY

In view of this, a parking method and apparatus are provided, to improve parking efficiency.

According to a first aspect, embodiments of this application provide a parking method. The method includes: determining first information, where the first information includes information associated with a first temporary parking space, and the information associated with the first temporary parking space includes at least one of the following: a first temporary parking point, the first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and sending the first information to the first vehicle.

In embodiments of this application, a start position for parking the first vehicle is determined, so that one-time parking is implemented in path planning, and parking efficiency is greatly improved.

According to the first aspect, in a first possible implementation of the method, the determining first information includes: determining the first information based on vehicle information of a second vehicle and/or operation task information of the second vehicle, where the second vehicle is the first vehicle or a vehicle of a same type as the first vehicle.

In embodiments of this application, at least one of the first temporary parking point, the first temporary parking space, and the first trajectory is determined based on the vehicle information and/or the operation task information of the second vehicle, and the first temporary parking point, the first temporary parking space, or the first trajectory is associated with the vehicle information and/or the operation task information. This helps the first vehicle quickly arrive at the target parking space of the first vehicle.

According to the first possible implementation of the first aspect, in a second possible implementation of the method, the method further includes: obtaining the vehicle information and/or the operation task information.

According to the first possible implementation or the second possible implementation of the first aspect, in a third possible implementation of the method, the determining the first information based on vehicle information of a second vehicle and/or operation task information of the second vehicle includes: determining the first temporary parking point or the first temporary parking space based on an operation position of the second vehicle and/or an operation area of the second vehicle, where the operation position of the second vehicle and/or the operation area of the second vehicle are/is included in the operation task information of the second vehicle.

In embodiments of this application, the first temporary parking point or the first temporary parking space is determined based on the operation position and/or the operation area of the second vehicle. This helps the first vehicle quickly arrive at the target parking space of the first vehicle.

According to the first possible implementation or the second possible implementation of the first aspect, in a fourth possible implementation of the method, the vehicle information includes size information of the second vehicle, the operation task information includes an operation position of the second vehicle and/or an operation area of the second vehicle, and the determining the first information based on vehicle information of a second vehicle and/or operation task information of the second vehicle includes: determining the first temporary parking point based on the operation position and/or the operation area; and determining the first temporary parking space based on the size information and the first temporary parking point, where the first temporary parking point is located in the first temporary parking space.

In embodiments of this application, the first temporary parking space is determined based on the size information, so that the first temporary parking space can be more suitable for the first vehicle, and it is convenient for the first vehicle to park in the first temporary parking space.

According to any one of the foregoing possible implementations of the first aspect, in a fifth possible implementation of the method, the operation task information includes the operation position of the second vehicle and/or the operation area of the second vehicle, and the determining the first information based on vehicle information of a second vehicle and/or operation task information of the second vehicle includes: determining the first temporary parking point based on the operation position and/or the operation area; and determining the first trajectory based on the first temporary parking point, where the first trajectory includes the first temporary parking point and the target parking space of the first vehicle.

In embodiments of this application, the first trajectory is determined, so that the first vehicle can be comprehensively indicated to travel from the first temporary parking point or the first temporary parking space to the target parking space along the first trajectory. This helps improve parking efficiency. It should be noted that, if the first temporary parking point has been determined previously, the step of determining the first temporary parking point does not need to be repeatedly performed herein.

According to any one of the first aspect or the foregoing possible implementations of the first aspect, in a sixth possible implementation of the method, the first temporary parking point or the first temporary parking space is located in a first position set, and there is at least one feasible path between any position included in the first position set and the target parking space of the first vehicle.

In this way, it can be ensured that there is at least one feasible path between the first temporary parking point or the first temporary parking space and the target parking space of the first vehicle. In other words, after traveling from the current position to the first temporary parking point or the first temporary parking space, the first vehicle can arrive at the target parking space of the first vehicle from the first temporary parking point or the first temporary parking space.

According to the sixth possible implementation of the first aspect, in a seventh possible implementation of the method, a distance between the any position included in the first position set and the target parking space of the first vehicle is less than a first distance.

In embodiments of this application, a distance between a position in the first position set and the target parking space of the first vehicle is limited, so that after parking at the first temporary parking point or in the first temporary parking space, the first vehicle can arrive at the target parking space of the first vehicle through an automated valet parking function. This helps improve efficiency of automated valet parking.

According to the sixth possible implementation or the seventh possible implementation of the first aspect, in an eighth possible implementation of the method, the any position included in the first position set is located in a temporary parking area.

In this way, the first temporary parking point or the first temporary parking space is limited in the temporary parking area, so that efficiency of determining the first temporary parking point or the first temporary parking space can be improved, to provide a favorable condition for improving parking efficiency.

According to the eighth possible implementation of the first aspect, in a ninth possible implementation of the method, a distance between the temporary parking area and the target parking space of the first vehicle is less than a second distance.

In embodiments of this application, the distance between the temporary parking area and the target parking space of the first vehicle is limited, so that the distance between the position in the first position set and the target parking space of the first vehicle is limited. In this way, after parking at the first temporary parking point or in the first temporary parking space, the first vehicle can arrive at the target parking space of the first vehicle through the automated valet parking function. This helps improve efficiency of automated valet parking.

According to any one of the sixth possible implementation to the ninth possible implementation of the first aspect, in a tenth possible implementation of the method, the any position included in the first position set is associated with point cloud data and/or road topology data of a high-definition map.

According to the first possible implementation or the second possible implementation of the first aspect, in an eleventh possible implementation of the method, the vehicle information and/or the operation task information include/includes point cloud data and/or road topology data of a high-definition map, and the first information includes the first temporary parking point. The determining the first information based on vehicle information of a second vehicle and/or operation task information of the second vehicle includes: obtaining a first position set based on the point cloud data and/or the road topology data, where there is at least one feasible path between any position included in the first position set and the target parking space of the first vehicle. The first information is included in the first position set.

According to the eleventh possible implementation of the first aspect, in a twelfth possible implementation of the method, a distance between the any position in the first position set and the target parking space of the first vehicle is less than a first distance.

According to the eleventh possible implementation or the twelfth possible implementation of the first aspect, in a thirteenth possible implementation of the method, the any position included in the first position set is located in a temporary parking area.

According to the thirteenth possible implementation of the first aspect, in a fourteenth possible implementation of the method, a distance between the temporary parking area and the target parking space of the first vehicle is less than a second distance.

According to any one of the first aspect or the foregoing possible implementations of the first aspect, in a fifteenth possible implementation of the method, the first temporary parking point or the first temporary parking space corresponds to a first sequence, and the first sequence represents a scheduling order of the first vehicle.

According to any one of the first aspect or the foregoing possible implementations of the first aspect, in a sixteenth possible implementation of the method, before the sending the first information, the method further includes: receiving request information of the first vehicle, where the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

According to any one of the first aspect or the foregoing possible implementations of the first aspect, in a seventeenth possible implementation of the method, after the sending the first information, the method further includes: receiving acknowledgment information of the first vehicle, where the acknowledgment information indicates that the first vehicle arrives at the first temporary parking point or arrives at the first temporary parking space.

According to any one of the first aspect or the foregoing possible implementations of the first aspect, in an eighteenth possible implementation of the method, the method further includes: determining M temporary parking spaces, where the M temporary parking spaces correspond to a first task, the first task is at least an operation task to be executed by the first vehicle, the M temporary parking spaces include the first temporary parking space, and M is an integer greater than 1.

In this way, a plurality of temporary parking spaces are provided as candidates, so that a temporary parking space that best matches the first vehicle can be selected. This helps improve parking efficiency.

According to the eighteenth possible implementation of the first aspect, in a nineteenth possible implementation of the method, the method further includes: determining the first temporary parking space or the first temporary parking point based on at least one of M, a quantity of vehicles executing the first task, and position information of N temporary parking spaces in the M temporary parking spaces, and position information of the first vehicle, where N is an integer greater than or equal to 1 and less than or equal to M.

This helps the first vehicle travel into the first temporary parking space or at the first temporary parking point, thereby improving parking efficiency.

According to the eighteenth possible implementation or the nineteenth possible implementation of the first aspect, in a twentieth possible implementation of the method, the M temporary parking spaces correspond to the first sequence, the first sequence includes M numbers, the M numbers are in a one-to-one correspondence with the M temporary parking spaces, and each number in the M numbers represents a scheduling order of a temporary parking space corresponding to the number.

According to any one of the first aspect or the foregoing possible implementations of the first aspect, in a twenty-first possible implementation of the method, the method further includes: sending second information to the first vehicle, where the second information indicates the first vehicle to display at least one of the following: the first temporary parking space, a number in the first sequence corresponding to the first temporary parking space, the M temporary parking spaces, a number in the first sequence corresponding to each of the M temporary parking spaces, the target parking space of the first vehicle, and the first trajectory.

This helps a driver of the first vehicle learn a parking status.

According to any one of the eighteenth possible implementation to the twenty-first possible implementation of the first aspect, in a twenty-second possible implementation of the method, the method further includes: sending a second temporary parking space to the first vehicle, where the second temporary parking space is located on the first trajectory, and the second temporary parking space is a parking space in a process in which the first vehicle travels from the first temporary parking space to the target parking space of the first vehicle.

In this way, an automated valet parking path of the first vehicle can be guided and regulated.

According to any one of the first aspect or the foregoing possible implementations of the first aspect, in a twenty-third possible implementation of the method, the method further includes: sending third information to the first vehicle, where the third information indicates the first vehicle to display at least one of the following: the first temporary parking space, the target parking space of the first vehicle, and the first trajectory.

According to any one of the first aspect or the foregoing possible implementations of the first aspect, in a twenty-fourth possible implementation of the method, the method further includes: sending fourth information to the first vehicle, where the fourth information indicates a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

According to the twenty-fourth possible implementation of the first aspect, in a twenty-fifth possible implementation of the method, the first temporary parking space is a start position in which the first vehicle starts the automated valet parking.

According to any one of the first aspect or the foregoing possible implementations of the first aspect, in a twenty-sixth possible implementation of the method, the target parking space of the first vehicle is a parking space in which the first vehicle executes an operation task or an operation position of the first vehicle.

According to a second aspect, an embodiment of this application provides a parking method. The method includes: receiving first information, where the first information includes information associated with a first temporary parking space, and the information associated with the first temporary parking space includes at least one of the following: a first temporary parking point, the first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and traveling to the target parking space of the first vehicle based on the first information.

In a possible implementation, the first information is determined based on vehicle information of a second vehicle and/or operation task information of the second vehicle, and the second vehicle is the first vehicle or a vehicle of a same type as the first vehicle.

In a possible implementation, the first temporary parking point or the first temporary parking space is determined based on an operation position of the second vehicle and/or an operation area of the second vehicle, and the operation position of the second vehicle and/or the operation area of the second vehicle are/is included in the operation task information of the second vehicle.

In a possible implementation, the vehicle information includes size information of the second vehicle, the operation task information includes an operation position of the second vehicle and/or an operation area of the second vehicle, the first temporary parking point is determined based on the operation position and/or the operation area, the first temporary parking space is determined based on the size information and the first temporary parking point, and the first temporary parking point is located in the first temporary parking space.

In a possible implementation, the operation task information includes the operation position of the second vehicle and/or the operation area of the second vehicle, the first temporary parking point is determined based on the operation position and/or the operation area, the first trajectory is determined based on the first temporary parking point, and the first trajectory includes the first temporary parking point and the target parking space of the first vehicle.

In a possible implementation, the first temporary parking point or the first temporary parking space is located in a first position set, and there is at least one feasible path between any position included in the first position set and the target parking space of the first vehicle.

In a possible implementation, a distance between the any position included in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the any position included in the first position set is associated with point cloud data and/or road topology data of a high-definition map.

In a possible implementation, the vehicle information and/or the operation task information include/includes point cloud data and/or road topology data of a high-definition map, the first information includes the first temporary parking point, the first information is included in a first position set, there is at least one feasible path between any position included in the first position set and the target parking space of the first vehicle, and the first position set is determined based on the point cloud data and/or a road topology data.

In a possible implementation, a distance between the any position in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the first temporary parking point or the first temporary parking space corresponds to a first sequence, and the first sequence represents a scheduling order of the first vehicle.

In a possible implementation, before the receiving first information, the method further includes: sending request information, where the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

In a possible implementation, after the receiving first information, the method further includes: sending acknowledgment information, where the acknowledgment information indicates that the first vehicle arrives at the first temporary parking point or arrives at the first temporary parking space.

In a possible implementation, the method further includes: receiving second information, where the second information indicates the first vehicle to display at least one of the following: the first temporary parking space, a number in the first sequence corresponding to the first temporary parking space, M temporary parking spaces, a number in the first sequence corresponding to each of the M temporary parking spaces, the target parking space of the first vehicle, and the first trajectory. The M temporary parking spaces correspond to a first task, the first task is at least an operation task to be executed by the first vehicle, the M temporary parking spaces include the first temporary parking space, and M is an integer greater than 1. The M temporary parking spaces correspond to the first sequence, the first sequence includes M numbers, the M numbers are in a one-to-one correspondence with the M temporary parking spaces, and each number in the M numbers represents a scheduling order of a temporary parking space corresponding to the number.

In a possible implementation, the method further includes: receiving a second temporary parking space, where the second temporary parking space is located on the first trajectory, and the second temporary parking space is a parking space in a process in which the first vehicle travels from the first temporary parking space to the target parking space of the first vehicle.

In a possible implementation, the method further includes: receiving third information, where the third information indicates the first vehicle to display at least one of the following: the first temporary parking space, the target parking space, and the first trajectory.

In a possible implementation, the method further includes: receiving fourth information, where the fourth information indicates a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

In a possible implementation, the first temporary parking space is a start position in which the first vehicle starts the automated valet parking.

In a possible implementation, the target parking space of the first vehicle is a parking space in which the first vehicle executes an operation task or an operation position of the first vehicle.

According to a third aspect, an embodiment of this application provides a parking apparatus. The apparatus includes:
a first determining module, configured to determine first information, where the first information includes at least one of the following: a first temporary parking point, a first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
a first sending module, configured to send the first information to the first vehicle.

In a possible implementation, the first determining module is further configured to:
determine the first information based on vehicle information of a second vehicle and/or operation task information of the second vehicle, where the second vehicle is the first vehicle or a vehicle of a same type as the first vehicle.

In a possible implementation, the apparatus further includes:
a first obtaining module, configured to obtain the vehicle information and/or the operation task information.

In a possible implementation, the determining the first information based on vehicle information of a second vehicle and/or operation task information of the second vehicle includes:
determining the first temporary parking point or the first temporary parking space based on an operation position of the second vehicle and/or an operation area of the second vehicle, where the operation position of the second vehicle and/or the operation area of the second vehicle are/is included in the operation task information of the second vehicle.

In a possible implementation, the vehicle information includes size information of the second vehicle, the operation task information includes an operation position of the second vehicle and/or an operation area of the second vehicle, and the determining the first information based on vehicle information of a second vehicle and/or operation task information of the second vehicle includes:
determining the first temporary parking point based on the operation position and/or the operation area; and
determining the first temporary parking space based on the size information and the first temporary parking point, where the first temporary parking point is located in the first temporary parking space.

In a possible implementation, the operation task information includes an operation position of the second vehicle and/or an operation area of the second vehicle, and the determining the first information based on vehicle information of a second vehicle and/or operation task information of the second vehicle includes:
determining the first temporary parking point based on the operation position and/or the operation area; and
determining the first trajectory based on the first temporary parking point, where the first trajectory includes the first temporary parking point and the target parking space of the first vehicle.

In a possible implementation, the first temporary parking point or the first temporary parking space is located in a first position set, and there is at least one feasible path between any position included in the first position set and the target parking space of the first vehicle.

In a possible implementation, a distance between the any position included in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the any position included in the first position set is associated with point cloud data and/or road topology data of a high-definition map.

In a possible implementation, the vehicle information and/or the operation task information include/includes point cloud data and/or road topology data of a high-definition map, the first information includes the first temporary parking point, and the determining the first information based on vehicle information of a second vehicle and/or operation task information of the second vehicle includes:
obtaining a first position set based on the point cloud data and/or the road topology data, where there is at least one feasible path between any position included in the first position set and the target parking space of the first vehicle.

The first information is included in the first position set.

In a possible implementation, a distance between the any position in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the first temporary parking point or the first temporary parking space corresponds to a first sequence, and the first sequence represents a scheduling order of the first vehicle.

In a possible implementation, before sending the first information, the apparatus further includes:
a first receiving module, configured to receive request information of the first vehicle, where the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

In a possible implementation, the apparatus further includes:
a second receiving module, configured to receive acknowledgment information of the first vehicle, where the acknowledgment information indicates that the first vehicle arrives at the first temporary parking point or arrives at the first temporary parking space.

In a possible implementation, the apparatus further includes:
a second determining module, configured to determine M temporary parking spaces, where the M temporary parking spaces correspond to a first task, the first task is at least an operation task to be executed by the first vehicle, the M temporary parking spaces include the first temporary parking space, and M is an integer greater than 1.

In a possible implementation, the apparatus further includes:
a third determining module, configured to determine the first temporary parking space or the first temporary parking point based on at least one of M, a quantity of vehicles executing the first task, and position information of N temporary parking spaces in the M temporary parking spaces, and position information of the first vehicle, where N is an integer greater than or equal to 1 and less than or equal to M.

In a possible implementation, the M temporary parking spaces correspond to the first sequence, the first sequence includes M numbers, the M numbers are in a one-to-one correspondence with the M temporary parking spaces, and each number in the M numbers represents a scheduling order of a temporary parking space corresponding to the number.

In a possible implementation, the apparatus further includes:
a first sending module, configured to send second information to the first vehicle, where the second information indicates the first vehicle to display at least one of the following: the first temporary parking space, a number in the first sequence corresponding to the first temporary parking space, the M temporary parking spaces, a number in the first sequence corresponding to each of the M temporary parking spaces, the target parking space of the first vehicle, and the first trajectory.

In a possible implementation, the apparatus further includes:
a second sending module, configured to send a second temporary parking space to the first vehicle, where the second temporary parking space is located on the first trajectory, and the second temporary parking space is a parking space in a process in which the first vehicle travels from the first temporary parking space to the target parking space of the first vehicle.

In a possible implementation, the apparatus further includes:
a third sending module, configured to send third information to the first vehicle, where the third information indicates the first vehicle to display at least one of the following: the first temporary parking space, the target parking space of the first vehicle, and the first trajectory.

In a possible implementation, the apparatus further includes:
a fourth sending module, configured to send fourth information to the first vehicle, where the fourth information indicates a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

In a possible implementation, the first temporary parking space is a start position in which the first vehicle starts the automated valet parking.

In a possible implementation, the target parking space of the first vehicle is a parking space in which the first vehicle executes an operation task or an operation position of the first vehicle.

According to a fourth aspect, an embodiment of this application provides a parking apparatus. The apparatus includes:
a first receiving module, configured to receive first information, where the first information includes at least one of the following: a first temporary parking point, a first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
a first traveling module, configured to travel to the target parking space of the first vehicle based on the first information.

In a possible implementation, the first information is determined based on vehicle information of a second vehicle and/or operation task information of the second vehicle, and the second vehicle is the first vehicle or a vehicle of a same type as the first vehicle.

In a possible implementation, the first temporary parking point or the first temporary parking space is determined based on an operation position of the second vehicle and/or an operation area of the second vehicle, and the operation position of the second vehicle and/or the operation area of the second vehicle are/is included in the operation task information of the second vehicle.

In a possible implementation, the vehicle information includes size information of the second vehicle, the operation task information includes an operation position of the second vehicle and/or an operation area of the second vehicle, the first temporary parking point is determined based on the operation position and/or the operation area, the first temporary parking space is determined based on the size information and the first temporary parking point, and the first temporary parking point is located in the first temporary parking space.

In a possible implementation, the operation task information includes the operation position of the second vehicle and/or the operation area of the second vehicle, the first temporary parking point is determined based on the operation position and/or the operation area, the first trajectory is determined based on the first temporary parking point, and the first trajectory includes the first temporary parking point and the target parking space of the first vehicle.

In a possible implementation, the first temporary parking point or the first temporary parking space is located in a first position set, and there is at least one feasible path between any position included in the first position set and the target parking space of the first vehicle.

In a possible implementation, a distance between the any position included in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the any position included in the first position set is associated with point cloud data and/or road topology data of a high-definition map.

In a possible implementation, the vehicle information and/or the operation task information include/includes point cloud data and/or road topology data of a high-definition map, the first information includes the first temporary parking point, the first information is included in a first position set, there is at least one feasible path between any position included in the first position set and the target parking space of the first vehicle, and the first position set is determined based on the point cloud data and/or a road topology data.

In a possible implementation, a distance between the any position in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the first temporary parking point or the first temporary parking space corresponds to a first sequence, and the first sequence represents a scheduling order of the first vehicle.

In a possible implementation, before receiving the first information, the apparatus further includes:
a first sending module, configured to send request information, where the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

In a possible implementation, the apparatus further includes:
a second sending module, configured to send acknowledgment information, where the acknowledgment information indicates that the first vehicle arrives at the first temporary parking point or arrives at the first temporary parking space.

In a possible implementation, the apparatus further includes:
a second receiving module, configured to receive second information, where the second information indicates the first vehicle to display at least one of the following: the first temporary parking space, a number in the first sequence corresponding to the first temporary parking space, M temporary parking spaces, a number in the first sequence corresponding to each of the M temporary parking spaces, the target parking space of the first vehicle, and the first trajectory.

The M temporary parking spaces correspond to a first task, the first task is at least an operation task to be executed by the first vehicle, the M temporary parking spaces include the first temporary parking space, and M is an integer greater than 1. The M temporary parking spaces correspond to the first sequence, the first sequence includes M numbers, the M numbers are in a one-to-one correspondence with the M temporary parking spaces, and each number in the M numbers represents a scheduling order of a temporary parking space corresponding to the number.

In a possible implementation, the apparatus further includes:
a third receiving module, configured to receive a second temporary parking space, where the second temporary parking space is located on the first trajectory, and the second temporary parking space is a parking space in a process in which the first vehicle travels from the first temporary parking space to the target parking space of the first vehicle.

In a possible implementation, the apparatus further includes:
a fourth receiving module, configured to receive third information, where the third information indicates the first vehicle to display at least one of the following: the first temporary parking space, the target parking space, and the first trajectory.

In a possible implementation, the apparatus further includes:
a fifth receiving module, configured to receive fourth information, where the fourth information indicates a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

In a possible implementation, the first temporary parking space is a start position in which the first vehicle starts the automated valet parking.

In a possible implementation, the target parking space of the first vehicle is a parking space in which the first vehicle executes an operation task or an operation position of the first vehicle.

According to a fifth aspect, an embodiment of this application provides an electronic device. The electronic device includes a processor and a memory configured to store instructions executable by the processor. The processor is configured to: when executing the instructions, implement the parking method in one or more of the first aspect or the plurality of possible implementations of the first aspect.

According to a sixth aspect, an embodiment of this application provides an electronic device. The electronic device includes a processor and a memory configured to store instructions executable by the processor. The processor is configured to: when executing the instructions, implement the parking method in one or more of the second aspect or the plurality of possible implementations of the second aspect.

According to a seventh aspect, an embodiment of this application provides a nonvolatile computer-readable storage medium. The nonvolatile computer-readable storage medium stores computer program instructions, and when the computer program instructions are executed by a processor, the parking method in one or more of the first aspect or the plurality of possible implementations of the first aspect or the parking method in one or more of the second aspect or the plurality of possible implementations of the second aspect is implemented.

According to an eighth aspect, an embodiment of this application provides a computer program product, including computer-readable code or a nonvolatile computer-readable storage medium carrying computer-readable code. When the computer-readable code is run on an electronic device, a processor in the electronic device performs the parking method in one or more of the first aspect or the plurality of possible implementations of the first aspect or the parking method in one or more of the second aspect or the plurality of possible implementations of the second aspect.

According to a ninth aspect, an embodiment of this application provides a vehicle, including the parking apparatus in one or more of the fourth aspect or the plurality of possible implementations of the fourth aspect, or the electronic device according to the sixth aspect.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a diagram of a structure of a parking system according to an embodiment of this application;
FIG. 2 is a diagram of a structure of an electronic device according to an embodiment of this application;
FIG. 3 is a schematic interaction flowchart of a parking method according to an embodiment of this application;
FIG. 4 is an example diagram of a temporary parking point, a temporary parking space, and a target parking space according to an embodiment of this application;
FIG. 5A and FIG. 5B are a schematic interaction flowchart of a parking method according to an embodiment of this application;
FIG. 6 is a block diagram of a parking apparatus according to an embodiment of this application; and
FIG. 7 is a block diagram of a parking apparatus according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as "an example" is not necessarily explained as being superior or better than other embodiments.

In addition, to better describe this application, numerous specific details are provided in the following specific implementations. A person skilled in the art should understand that this application can also be implemented without some specific details. In some instances, methods, means, elements, and circuits that are well-known to a person skilled in the art are not described in detail, so that the subject matter of this application is highlighted.

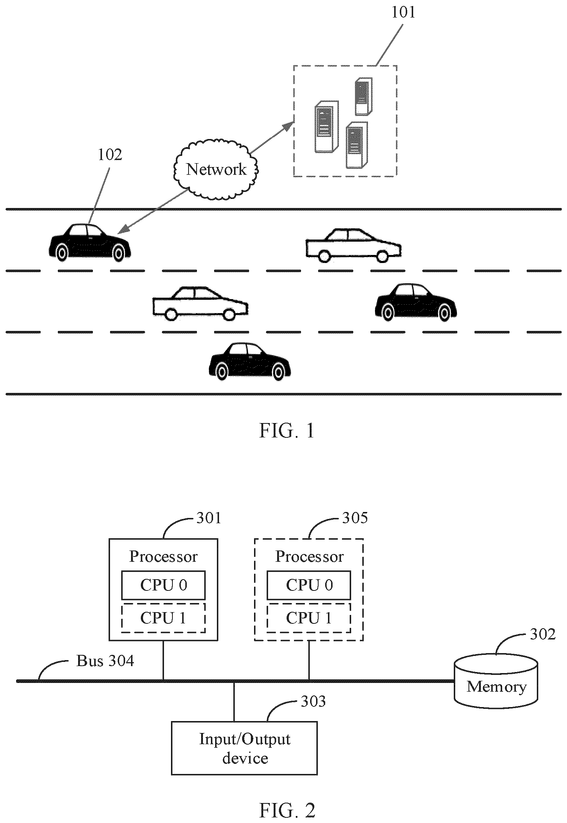

FIG. 1 is a diagram of a structure of a parking system according to an embodiment of this application. As shown in FIG. 1, the system may include a cloud 101 and a vehicle 102. A communication connection is established between the cloud 101 and the vehicle 102. A first vehicle is used as an example. In embodiments of this application, the cloud 101 may determine information related to a first temporary parking space, such as a first temporary parking point, the first temporary parking space, or a first trajectory. The first temporary parking point is a parking point in a process in which the first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle. The cloud 101 may send the first temporary parking point, the first temporary parking space, or the first trajectory to the first vehicle, so that the first vehicle parks efficiently. Herein, the first vehicle may represent any vehicle 102. In an example, the first vehicle may be any type of vehicle like a mining vehicle, an excavator, a logistics vehicle, or a taxi. The first vehicle is not limited in embodiments of this application. The cloud 101 may be an entity device like a host, a framework server, or a blade server, or may be a virtual device like a virtual machine or a container.

FIG. 2 is a diagram of a structure of an electronic device according to an embodiment of this application. The electronic device may be deployed on the cloud 101.

As shown in FIG. 2, the electronic device may include at least one processor 301, a memory 302, an input/output device 303, and a bus 304. The following describes components of the electronic device in detail with reference to FIG. 2.

The processor 301 is a control center of the electronic device, and may be a processor, or may be a collective term of a plurality of processing elements. For example, the processor 301 is a central processing unit (Central Processing Unit, CPU), or may be an application-specific integrated circuit (Application-Specific Integrated Circuit, ASIC), or is configured as one or more integrated circuits configured to implement embodiments of this disclosure, for example, one or more microprocessors (Digital Signal Processors, DSPs), or one or more field programmable gate arrays (Field Programmable Gate Arrays, FPGAs).

The processor 301 may perform various functions of the electronic device by running or executing a software program stored in the memory 302 and invoking data stored in the memory 302.

During specific implementation, in an embodiment, the processor 301 may include one or more CPUs such as a CPU 0 and a CPU 1 in the figure.

During specific implementation, in an embodiment, the electronic device may include a plurality of processors, for example, the processor 301 and a processor 305 shown in FIG. 2. Each of the processors may be a single-core processor (single-CPU) or a multi-core processor (multi-CPU). The processor herein may be one or more devices, circuits, and/or processing cores configured to process data (for example, computer program instructions).

The memory 302 may be a read-only memory (Read-Only Memory, ROM) or another type of static storage device that can store static information and instructions, or a random access memory (Random Access Memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or other optical disk storage, optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory 302 may exist independently, and is connected to the processor 301 through the bus 304. The memory 302 may alternatively be integrated with the processor 301.

The input/output device 303 is configured to communicate with another device or a communication network, for example, the Ethernet, a radio access network (Radio access network, RAN), a wireless local area network (Wireless Local Area Network, WLAN), and other communication networks. The input/output device 303 may include all or a part of a baseband processor, and may alternatively include a radio frequency (Radio Frequency, RF) processor. The RF processor is configured to send or receive an RF signal. The baseband processor is configured to process a baseband signal converted from an RF signal, or a baseband signal to be converted into an RF signal.

During specific implementation, in an embodiment, the input/output device 303 may include a transmitter and a receiver. The transmitter is configured to send a signal to another device or a communication network, and the receiver is configured to receive a signal sent by the another device or the communication network. The transmitter and the receiver may exist independently, or may be integrated together.

The bus 304 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

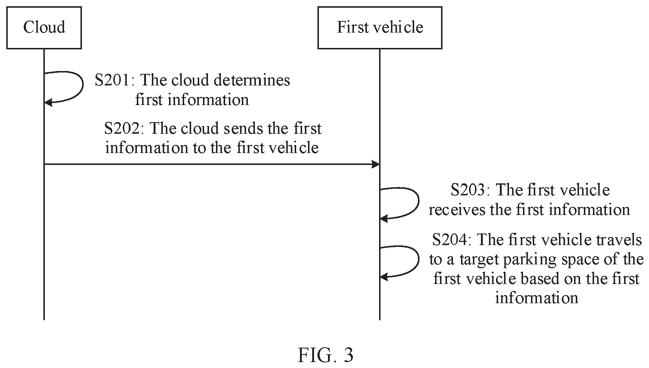

FIG. 3 is a schematic interaction flowchart of a parking method according to an embodiment of this application. The method may be applied to the system shown in FIG. 1. As shown in FIG. 3, the method may include the following steps.

Step S201: A cloud determines first information.

A first vehicle may represent a vehicle to park, and the first vehicle may be any vehicle. In an example, the first vehicle may be any type of vehicle like a mining vehicle, an excavator, a logistics vehicle, or a taxi. The first vehicle is not limited in embodiments of this application.

A target parking space of the first vehicle may indicate a final parking position of the first vehicle. In an example, the target parking space of the first vehicle may be a parking space in which the first vehicle executes an operation task or an operation position of the first vehicle. For example, the operation task executed by the first vehicle includes but is not limited to mining, loading, unloading, carrying a passenger, or the like. The operation position of the first vehicle includes but is not limited to a mining position, a loading position, an unloading position, or a passenger waiting position. For example, when the first vehicle executes a mining operation task, the target parking space of the first vehicle is a parking space during mining or a mining position; when the first vehicle executes a loading operation task, the target parking space of the first vehicle is a parking space during loading or a loading position; when the first vehicle executes an unloading operation task, the target parking space of the first vehicle is a parking space during unloading or an unloading position; or when the first vehicle executes an operation task of carrying a passenger, the target parking space of the first vehicle is a parking space for picking up a passenger or a passenger waiting position. The foregoing is merely an example description of the operation task, the operation position, and the target parking space. The operation task, the operation position, and the target parking space of the first vehicle are not limited in embodiments of this application.

A first temporary parking space is a parking space in a process in which the first vehicle travels from a current position to the target parking space. In an embodiment of this application, in the process in which the first vehicle travels from the current position to the target parking space, the first vehicle may park in the first temporary parking space. In other words, the first vehicle may first travel from the current position to the first temporary parking space, and then travel from the first temporary parking space to the target parking space of the first vehicle. This helps improve efficiency of automated valet parking of the first vehicle.

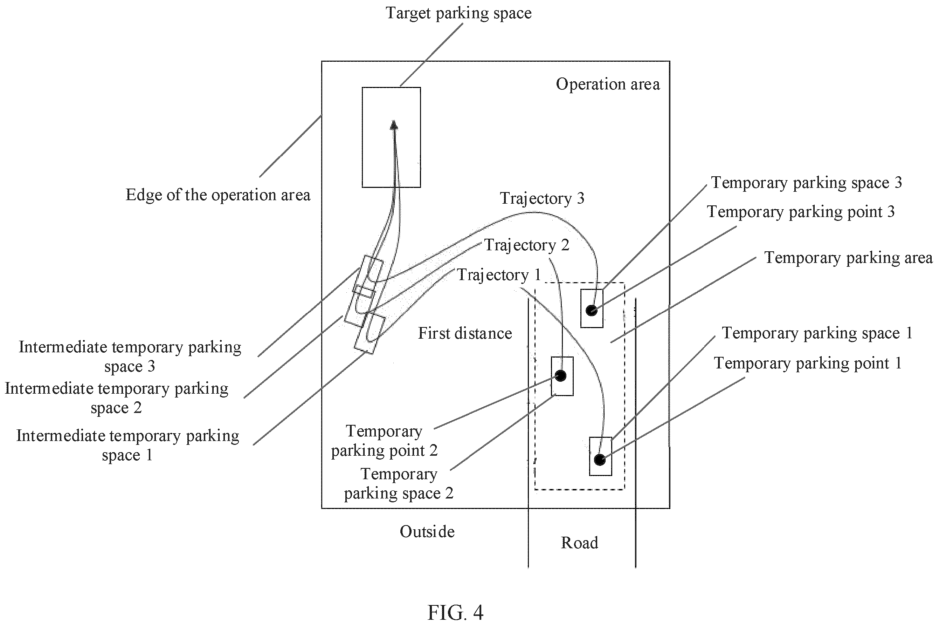

The first information may include information associated with the first temporary parking space. The information associated with the first temporary parking space includes at least one of the following: a first temporary parking point, the first temporary parking space, or a first trajectory. The first temporary parking point is a parking point in the process in which the first vehicle travels from the current position to the target parking space, the first temporary parking space is a parking space in the process in which the first vehicle travels from the current position to the target parking space, and the first trajectory is a movement trajectory between the first temporary parking space or the first temporary parking point and the target parking space of the first vehicle. FIG. 4 is an example diagram of the temporary parking point, the temporary parking space, and the target parking space according to embodiments of this application. FIG. 4 shows three temporary parking points (a temporary parking point 1, a temporary parking point 2, and a temporary parking point 3), three temporary parking spaces (a temporary parking space 1, a temporary parking space 2, and a temporary parking space 3), and three trajectories (a trajectory 1, a trajectory 2, and a trajectory 3). For example, the temporary parking point 1 is the parking point in the process in which the first vehicle travels from the current position to the target parking space, the temporary parking space 1 is the parking space in the process in which the first vehicle travels from the current position to the target parking space, and the trajectory 1 is a movement trajectory between the temporary parking point 1 or the temporary parking space 1 and the target parking space of the first vehicle. The first information may be at least one of the temporary parking point 1, the temporary parking space 1, and the trajectory 1. The first information may further include other information that is not related to the first temporary parking space, for example, time information and congestion information. This is not limited in embodiments of this application.

In a possible implementation, embodiments of this application provide a first position set, and there is at least one feasible path between any position included in the first position set and the target parking space of the first vehicle. The first temporary parking point or the first temporary parking space is located in the first position set. In this way, it can be ensured that there is at least one feasible path between the first temporary parking point or the first temporary parking space and the target parking space of the first vehicle. In other words, after traveling from the current position to the first temporary parking point or the first temporary parking space, the first vehicle can arrive at the target parking space of the first vehicle from the first temporary parking point or the first temporary parking space.

In an example, a distance between the any position included in the first position set and the target parking space of the first vehicle is less than a first distance. The first distance may be set based on a requirement. For example, the first distance may be set to a maximum planned distance of the first vehicle for automated valet parking, 90% of the maximum planned distance, or the like. For example, the first distance may be 50 meters. In this way, after parking at the first temporary parking point or in the first temporary parking space, the first vehicle may start the automated valet parking (Automated Valet Parking, AVP) to perform path planning, to travel to the target parking space of the first vehicle based on a planned path.

When a position in the first position set is a temporary parking point, a distance between the temporary parking point and a preset position of the target parking space (for example, a center, an upper left corner, or a lower right corner of the target parking space) of the first vehicle may be determined as a distance between the temporary parking point and the target parking space of the first vehicle. When a position in the first position set is a temporary parking space, a distance between a preset position of the temporary parking space (for example, a center, an upper left corner, or a lower right corner of the temporary parking space) and a preset position of the target parking space of the first vehicle may be determined as a distance between the temporary parking space and the target parking space of the first vehicle.

In embodiments of this application, a distance between a position in the first position set and the target parking space of the first vehicle is limited, so that after parking at the first temporary parking point or in the first temporary parking space, the first vehicle can arrive at the target parking space of the first vehicle through an automated valet parking function. This helps improve efficiency of automated valet parking.

In an example, the any position included in the first position set is located in a temporary parking area. In embodiments of this application, the temporary parking area may be first planned, and then the first temporary parking point or the first temporary parking space is determined in the temporary parking area. In this way, the first temporary parking point or the first temporary parking space is limited in the temporary parking area, so that efficiency of determining the first temporary parking point or the first temporary parking space can be improved, to provide a favorable condition for improving parking efficiency.

Specifically, the temporary parking area may be planned on a road connected to the outside (an area outside an edge of the operation area shown in FIG. 4) in an operation area (namely, an area in which the first vehicle completes the operation task, for example, a mining area, a logistics park, a port, a closed park, or a shopping mall parking lot). In this way, it can be ensured that the first vehicle can smoothly arrive at the first temporary parking point or the first temporary parking space from the outside of the operation area, to help improve parking efficiency. Further, in embodiments of this application, a heading course of each temporary parking space (including the first temporary parking space) in the temporary parking area may be set to a heading course consistent with a heading course of a road center line of the road. In this way, the first vehicle can arrive at the first temporary parking space without turning around or making a large turn. This shortens time for the vehicle to arrive at the first temporary parking space, and helps further improve parking efficiency. Certainly, the temporary parking area may alternatively be planned in another position (for example, an unobstructed open area in the operation area or near the operation area). This is not limited in embodiments of this application.

In an example, a distance between the temporary parking area and the target parking space of the first vehicle is less than a second distance. The second distance may be set based on a requirement. For example, the second distance may be set to the maximum planned distance of the first vehicle for automated valet parking, 90% of the maximum planned distance, or the like. For example, the second distance may be 50 meters. The second distance may be the same as or different from the first distance. This is not limited in embodiments of this application. In this way, after parking at the first temporary parking point or in the first temporary parking space, the first vehicle may start the automated valet parking to perform path planning, to travel to the target parking space of the first vehicle based on a planned path.

Specifically, a distance between a preset position of the temporary parking area (for example, a center, an upper left corner, or a lower right corner of the temporary parking area) and a preset position of the target parking space of the first vehicle may be determined as a distance between the temporary parking area and the target parking space of the first vehicle.

In embodiments of this application, the distance between the temporary parking area and the target parking space of the first vehicle is limited, so that the distance between the position in the first position set and the target parking space of the first vehicle is limited. In this way, after parking at the first temporary parking point or in the first temporary parking space, the first vehicle can arrive at the target parking space of the first vehicle through the automated valet parking function. This helps improve efficiency of automated valet parking.

In a possible implementation, the any position included in the first position set provided in embodiments of this application is associated with point cloud data and/or road topology data of a high-definition map.

For example, a passable area (namely, an area in which the vehicle can travel) in the operation area may be first obtained based on the point cloud data and/or the road topology data of the high-definition map, and range constraints such as clustering and segmentation are performed to obtain a road connected to the outside in the operation area, the temporary parking area, a feasible path to the target parking space in the operation area, and the like. Based on this, the position in the first position set may be obtained. In this automatic processing manner, labor costs can be saved.

For example, an administrator may mark, on the point cloud data and/or the road topology data of the high-definition map through a client, the road connected to the outside in the operation area, the temporary parking area, the feasible path to the target parking space in the operation area, and the like. Based on this, the position in the first position set may be obtained. In this manual processing manner, accuracy can be improved. The client includes but is not limited to an application, a web page, an applet, or the like.

In addition, in embodiments of this application, the target parking space of the first vehicle may be reported by the first vehicle, or may be set by the administrator through the client, or may be preconfigured by a cloud server based on the operation task of the first vehicle. This is not limited in embodiments of this application.

In a possible implementation, step S201 may include: determining the first information based on vehicle information of a second vehicle and/or operation task information of the second vehicle.

The second vehicle may be the first vehicle or a vehicle of a same type as the first vehicle. This is not limited in embodiments of this application. In embodiments of this application, vehicles of a same type may include vehicles executing a same operation task, vehicles in a same operation area, vehicles in a same target parking space, vehicles in a same vehicle fleet, or the like. It may be understood that, size information and dynamic models of vehicles of a same type are the same or similar, and parking manners of vehicles of a same type are the same or similar. Therefore, for a manner of determining first information of a vehicle, refer to a manner of determining first information of a vehicle of a same type as the vehicle. For example, for a manner of determining first information of a mining vehicle, refer to a manner of determining first information of another mining vehicle, and for a manner of determining first information of a taxi, refer to a manner of determining first information of another taxi. Size information of a vehicle includes but is not limited to a length, a width, a height, and the like of the vehicle. A dynamic model of the vehicle includes but is not limited to a turning radius, a maximum curvature, a wheel base, a speed, and the like.

In an example, the cloud may obtain the vehicle information of the second vehicle and/or the operation task information of the second vehicle from the second vehicle. In a possible implementation, when determining to execute an operation task or after starting to execute the operation task, the second vehicle may actively report the vehicle information of the second vehicle and/or the operation task information of the second vehicle to the cloud. In another possible implementation, the cloud may periodically broadcast or send an information obtaining request to the second vehicle in a task list. After receiving the information obtaining request, the second vehicle may return the vehicle information of the second vehicle and/or the operation task information of the second vehicle to the cloud. An occasion on which the cloud obtains the vehicle information of the second vehicle and/or the operation task information of the second vehicle from the second vehicle is not limited in embodiments of this application.

In another example, the vehicle information of the second vehicle and/or the operation task information of the second vehicle may be preconfigured on the cloud. For example, the administrator may log in to the client to perform the preconfiguration.

The following describes in detail a manner of determining the first information.

In a possible implementation, the operation task information of the second vehicle may include an operation position of the second vehicle and/or an operation area of the second vehicle. In this case, the determining the first information based on vehicle information of a second vehicle and/or operation task information of the second vehicle may include: determining the first temporary parking point or the first temporary parking space based on the operation position of the second vehicle and/or the operation area of the second vehicle. It is considered that the operation position of the second vehicle and/or the operation area of the second vehicle determine/determines a target parking space of the second vehicle (namely, the target parking space of the first vehicle), and the second vehicle needs to travel from the first temporary parking point or the first temporary parking space to the target parking space of the second vehicle. For example, in a mining scenario, the operation position of the second vehicle is a parking space during mining or a mining position, namely, the target parking space of the second vehicle; and the operation area of the second vehicle is a mining area, in other words, the target parking space of the second vehicle is in the mining area. To complete mining, the second vehicle needs to travel from the first temporary parking point or the first temporary parking space to the target parking space of the second vehicle. For another example, in a passenger carrying scenario, the operation position of the second vehicle is a parking space for picking up a passenger or a passenger waiting position, namely, the target parking space of the second vehicle. To complete passenger carrying, the second vehicle needs to travel from the first temporary parking point or the first temporary parking space to the target parking space of the second vehicle. Therefore, the first temporary parking point or the first temporary parking space may be determined based on the operation position of the second vehicle and/or the operation area of the second vehicle.

In an example, the cloud may first determine the first position set based on the operation position of the second vehicle and/or the operation area of the second vehicle, and then select the first temporary parking point or the first temporary parking space from the first position set. In another example, the cloud may first determine a feasible path based on the operation position of the second vehicle and/or the operation area of the second vehicle, and then select the first temporary parking point or the first temporary parking space from the feasible path. In still another example, the cloud may first determine the temporary parking area based on the operation position of the second vehicle and/or the operation area of the second vehicle, generate a feasible path between the operation position of the second vehicle and the temporary parking area according to a hybrid A* algorithm, and then select the first temporary parking point or the first temporary parking space from a part of the feasible path that falls in the temporary parking area.

In this way, the cloud may determine the first temporary parking point or the first temporary parking space as the first information. It should be noted that, the cloud may determine the first temporary parking point but not determine the first temporary parking space, or may first determine the first temporary parking point, and then determine the first temporary parking space based on the first temporary parking point and preconfigured size information. The first temporary parking point is located in the first temporary parking space, and the first temporary parking point may be located in a center of the first temporary parking space, or may be located in another position of the first temporary parking space. This is not limited in this application. A size of the first temporary parking space may be greater than or equal to a size of the second vehicle. For example, a length of the first temporary parking space is greater than or equal to a length of the second vehicle, and a width of a second temporary parking space is greater than or equal to a width of the second vehicle. Size information of the second vehicle may be reported by the second vehicle, or may be set by the administrator through the client. This is not limited in embodiments of this application.

In a possible implementation, the vehicle information of the second vehicle includes the size information of the second vehicle, and the operation task information of the second vehicle includes the operation position of the second vehicle and/or the operation area of the second vehicle. The determining the first information based on vehicle information of a second vehicle and/or operation task information of the second vehicle may include: determining the first temporary parking point based on the operation position of the second vehicle and/or the operation area of the second vehicle; and determining the first temporary parking space based on the size information of the second vehicle and the first temporary parking point, where the first temporary parking point is located in the first temporary parking space.

In this way, the cloud first determines the first temporary parking point and then determines the first temporary parking space, and the cloud may determine the first temporary parking point and/or the first temporary parking space as the first information.

In a possible implementation, the operation task information of the second vehicle includes the operation position of the second vehicle and/or the operation area of the second vehicle. In this case, the determining the first information based on vehicle information of a second vehicle and/or operation task information of the second vehicle may include: determining the first temporary parking point based on the operation position of the second vehicle and/or the operation area of the second vehicle; and determining the first trajectory based on the first temporary parking point, where the first trajectory includes the first temporary parking point and the target parking space of the first vehicle. In a process of determining the first trajectory based on the first temporary parking point, reference may be made to a dynamic model of the second vehicle, so that the first vehicle travels along the first trajectory. The dynamic model of the second vehicle herein may be reported by the second vehicle, or may be set by the administrator through the client. This is not limited in embodiments of this application.

In this way, the cloud first determines the first temporary parking point and then determines the first trajectory, and the cloud may determine at least one of the first temporary parking point, the first temporary parking space, and the first trajectory as the first information.

In embodiments of this application, in addition to the foregoing several manners, the first information may be further determined based on the point cloud data and/or the road topology data of the high-definition map. The following describes in detail the manner of determining the first information.

In a possible implementation, the vehicle information and/or the operation task information include/includes the point cloud data and/or the road topology data of the high-definition map, and the first information includes the first temporary parking point. The determining the first information based on the vehicle information and/or the operation task information of the second vehicle may include: obtaining the first position set based on the point cloud data and/or the road topology data, where there is at least one feasible path between any position included in the first position set and the target parking space of the first vehicle, and the first information is included in the first position set.

In an example, a distance between the any position included in the first position set and the target parking space of the first vehicle is less than a first distance. In another example, the any position included in the first position set is located in a temporary parking area. In still another example, a distance between the temporary parking area and the target parking space of the first vehicle is less than a second distance.

In a possible implementation, the cloud may first determine M temporary parking spaces, where the M temporary parking spaces correspond to a first task, the first task is at least an operation task to be executed by the first vehicle, the M temporary parking spaces include the first temporary parking space, and M is an integer greater than 1. During specific implementation, the cloud may select M positions from the first position set as the M temporary parking spaces. These temporary parking spaces may all be used as temporary parking spaces in a process in which the first vehicle travels to the target parking space of the first vehicle when executing the first task.

For example, the cloud may determine the first temporary parking space or the first temporary parking point based on at least one of M, a quantity of vehicles executing the first task, and position information of N temporary parking spaces in the M temporary parking spaces, and position information of the first vehicle, where N is an integer greater than or equal to 1 and less than or equal to M. For example, a temporary parking space closest to the first vehicle may be determined as the first temporary parking space, or an available temporary parking space may be determined as the first temporary parking space, or a temporary parking space that is allocated a minimum quantity of times may be determined as the first temporary parking space. This is not limited in embodiments of this application.

For example, alternatively, the cloud may randomly select an unoccupied temporary parking space from the M temporary parking spaces as the first temporary parking space.

It is considered that a plurality of vehicles may execute a same operation task or need to arrive at a same target parking space, and congestion occurs when these vehicles arrive at a corresponding temporary parking point or temporary parking space at the same time or travel from the temporary parking point or temporary parking space to the target parking space at the same time. According to the parking method provided in embodiments of this application, these vehicles can be scheduled, to reduce congestion and improve parking efficiency.

In a possible implementation, the M temporary parking spaces correspond to a first sequence, the first sequence includes M numbers, the M numbers are in a one-to-one correspondence with the M temporary parking spaces, and each number in the M numbers represents a scheduling order of a temporary parking space corresponding to the number. In this way, vehicles can be scheduled to reduce congestion and improve parking efficiency. It should be noted that, the first sequence may include only one number, in other words, a value of M may be 1.

Step S202: The cloud sends the first information to the first vehicle.

Step S203: The first vehicle receives the first information.

Step S204: The first vehicle travels to the target parking space of the first vehicle based on the first information.

When the first vehicle receives the first temporary parking point or the first temporary parking space, the first vehicle first parks at the first temporary parking point or in the first temporary parking space, and then travels from the first temporary parking point or the first temporary parking space to the target parking space of the first vehicle. For example, path planning may be performed through automated valet parking when the first vehicle travels from the first temporary parking space to the target parking space of the first vehicle.

For example, when the first vehicle receives only the first trajectory, the first vehicle may first determine the first temporary parking space or the first temporary parking point based on the first trajectory, and then travel from the first temporary parking space or the first temporary parking point to the target parking space of the first vehicle along the first trajectory.

When the first vehicle receives the first temporary parking point or the first temporary parking space, and the first trajectory, the first vehicle first parks at the first temporary parking point or in the first temporary parking space, and then travels from the first temporary parking point or the first temporary parking space to the target parking space of the first vehicle along the first trajectory.

In embodiments of this application, a start position for parking is determined, so that one-time parking is implemented in path planning, and parking efficiency is greatly improved.

In a possible implementation, the first temporary parking point or the first temporary parking space corresponds to the first sequence, and the first sequence represents the scheduling order of the first vehicle. For the first sequence, refer to the foregoing descriptions. Details are not described herein again. In this way, after obtaining the first temporary parking point or the first temporary parking space, the first vehicle may accept scheduling in an order of the first temporary parking point or the first temporary parking space in the first sequence. For example, elements included in the first sequence respectively correspond to the temporary parking point 2, the temporary parking point 1, and the temporary parking point 3 in sequence. It is assumed that the first temporary parking point corresponds to the temporary parking point 1. In this case, the scheduling order of the first vehicle is second. In this case, the cloud first schedules a vehicle corresponding to the temporary parking point 2, in other words, the vehicle corresponding to the temporary parking point 2 first travels to the target parking space (for example, an operation position), and then the cloud schedules a vehicle corresponding to the temporary parking point 1, namely, the first vehicle.

In embodiments of this application, the first vehicle is scheduled by setting the first sequence, so that a scenario in which a plurality of vehicles travel in disorder in an operation area can be effectively avoided, temporary parking of the vehicles can be appropriately and orderly allocated to a maximum extent, and automated valet parking can be performed, to implement an efficient multi-vehicle collaborative operation, and improve operation efficiency.

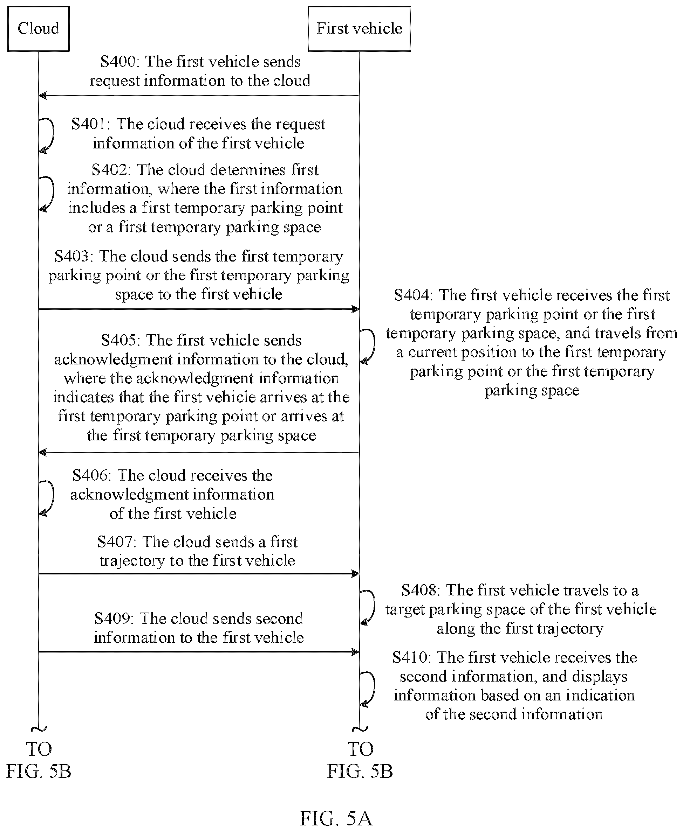

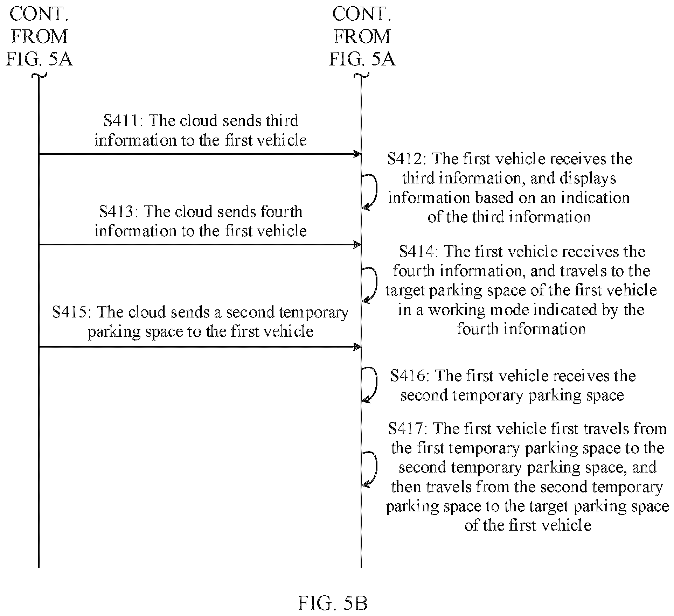

FIG. 5A and FIG. 5B are a schematic interaction flowchart of a parking method according to an embodiment of this application. As shown in FIG. 5A and FIG. 5B, the method may include the following steps.

Step S400: A first vehicle sends request information to a cloud.

The request information may be used to request at least one of the following: a parking point of the first vehicle, a parking space of the first vehicle, a movement trajectory of the first vehicle traveling from the parking point of the first vehicle to a target parking space of the first vehicle, and a movement trajectory of the first vehicle traveling from the parking space of the first vehicle to the target parking space of the first vehicle.

Step S401: The cloud receives the request information of the first vehicle.

Step S402: The cloud determines first information, where the first information includes a first temporary parking point or a first temporary parking space.

For this step, refer to step S201. Details are not described herein again.

Step S403: The cloud sends the first temporary parking point or the first temporary parking space to the first vehicle.

Step S404: The first vehicle receives the first temporary parking point or the first temporary parking space, and travels from a current position to the first temporary parking point or the first temporary parking space.

Step S405: The first vehicle sends acknowledgment information to the cloud, where the acknowledgment information indicates that the first vehicle arrives at the first temporary parking point or arrives at the first temporary parking space.

Step S406: The cloud receives the acknowledgment information of the first vehicle.

Step S407: The cloud sends a first trajectory to the first vehicle.

Step S408: The first vehicle travels to the target parking space of the first vehicle along the first trajectory.

In embodiments of this application, after arriving at the first temporary parking point or the first temporary parking space, the first vehicle travels to the target parking space of the first vehicle along the first trajectory planned by the cloud, and the cloud indicates the first vehicle to park, so that when another dynamic vehicle interferes with an automated valet parking function of the first vehicle, parking of the first vehicle can still be implemented. This effectively improves parking efficiency of the first vehicle.

In a possible implementation, as shown in FIG. 5A and FIG. 5B, the method may further include the following steps.

Step S409: The cloud sends second information to the first vehicle.

The second information indicates the first vehicle to display at least one of the following: the first temporary parking space, a number in a first sequence corresponding to the first temporary parking space, M temporary parking spaces, a number in the first sequence corresponding to each of the M temporary parking spaces, the target parking space of the first vehicle, and the first trajectory. For a manner of determining the M temporary parking spaces, refer to the foregoing description. Details are not described herein again.

Step S410: The first vehicle receives the second information, and displays information based on an indication of the second information.

This can help a driver learn a scheduling order.

In a possible implementation, the method may further include the following steps.

Step S411: The cloud sends third information to the first vehicle.

The third information may indicate the first vehicle to display at least one of the following: the first temporary parking space, the target parking space of the first vehicle, and the first trajectory.

Step S412: The first vehicle receives the third information, and displays information based on an indication of the third information.

This can help the driver learn an overall parking situation.

In a possible implementation, the method may further include the following steps.

Step S413: The cloud sends fourth information to the first vehicle.

The fourth information may indicate a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

Step S414: The first vehicle receives the fourth information, and travels to the target parking space of the first vehicle in the working mode indicated by the fourth information.

In this way, in the first mode, the first vehicle may travel from the first temporary parking point or the first temporary parking space to the target parking space of the first vehicle by using the automated valet parking function of the first vehicle. This facilitates precise parking. In the second mode, the first vehicle may travel from the first temporary parking point or the first temporary parking space to the target parking space of the first vehicle along the trajectory planned by the cloud. This helps adapt to a complex external environment. In addition, flexibility is improved by switching between the first mode and the second mode.

In a possible implementation, the method may further include the following steps.

Step S415: The cloud sends a second temporary parking space to the first vehicle.

The second temporary parking space is located on the first trajectory, and the second temporary parking space is a parking space in a process in which the first vehicle travels from the first temporary parking space to the target parking space of the first vehicle.

As shown in FIG. 4, an intermediate temporary parking space 1, an intermediate temporary parking space 2, and an intermediate temporary parking space 3 may be used as the second temporary parking space.

Step S416: The first vehicle receives the second temporary parking space.

Step S417: The first vehicle first travels from the first temporary parking space to the second temporary parking space, and then travels from the second temporary parking space to the target parking space of the first vehicle.

In this process, two paths may be planned by using the automated valet parking function of the first vehicle, and automated valet parking is performed twice. The first temporary parking space is a start position when the first vehicle starts automated valet parking for the first time, the second temporary parking space is a stop position when the first vehicle starts automated valet parking for the first time and a start position when the first vehicle starts automated valet parking for the second time, and the target parking space of the first vehicle is a stop position when the first vehicle starts automated valet parking for the second time. The second temporary parking space is designed, so that vehicle operations in an operation area can be planned orderly, to avoid operation vehicle congestion in the operation area and improve operation efficiency. It may be understood that, in embodiments of this application, for the first vehicle, a quantity of temporary parking spaces is not specifically limited. For example, there may be more than one temporary parking space. For example, in FIG. 4, the path from the second temporary parking space to the target parking space may further include another temporary parking space.

It should be noted that, in embodiments of this application, in addition to being understood as a parking space in which a vehicle (for example, the first vehicle) executes an operation task or an operation position of the vehicle (for example, the first vehicle), the target parking space may also be understood as a temporary parking space from the first temporary parking space to the operation position or the parking space in which the operation task is executed, for example, the second temporary parking space in embodiments of this application.

It may be understood that, in embodiments of this application, in a possible implementation, the first temporary parking space may be understood as a corresponding parking space in which the vehicle starts AVP. In other words, starting from the first temporary parking space, the vehicle travels to a subsequent location through AVP, and the location may be, for example, the second temporary parking space or the target parking space in embodiments of this application.

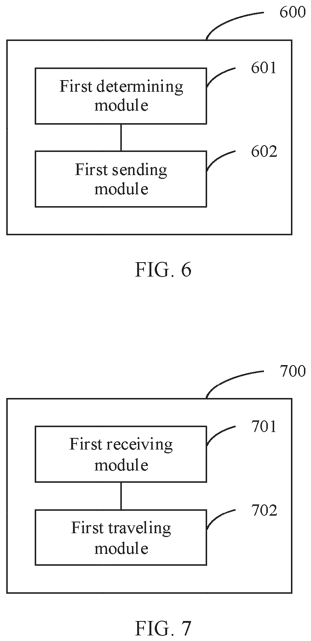

FIG. 6 is a block diagram of a parking apparatus according to an embodiment of this application. As shown in FIG. 6, the apparatus 600 may include:
a first determining module 601, configured to determine first information, where the first information includes at least one of the following: a first temporary parking point, a first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
a first sending module 602, configured to send the first information to the first vehicle.

In a possible implementation, the first determining module is further configured to:
determine the first information based on vehicle information of a second vehicle and/or operation task information of the second vehicle, where the second vehicle is the first vehicle or a vehicle of a same type as the first vehicle.

In a possible implementation, the apparatus further includes:
a first obtaining module, configured to obtain the vehicle information and/or the operation task information.

In a possible implementation, the determining the first information based on vehicle information of a second vehicle and/or operation task information of the second vehicle includes:
determining the first temporary parking point or the first temporary parking space based on an operation position of the second vehicle and/or an operation area of the second vehicle, where the operation position of the second vehicle and/or the operation area of the second vehicle are/is included in the operation task information of the second vehicle.

In a possible implementation, the vehicle information includes size information of the second vehicle, the operation task information includes the operation position of the second vehicle and/or the operation area of the second vehicle, and the determining the first information based on vehicle information of a second vehicle and/or operation task information of the second vehicle includes:
determining the first temporary parking point based on the operation position and/or the operation area; and
determining the first temporary parking space based on the size information and the first temporary parking point, where the first temporary parking point is located in the first temporary parking space.

In a possible implementation, the operation task information includes the operation position of the second vehicle and/or the operation area of the second vehicle, and the determining the first information based on vehicle information of a second vehicle and/or operation task information of the second vehicle includes:
determining the first temporary parking point based on the operation position and/or the operation area; and
determining the first trajectory based on the first temporary parking point, where the first trajectory includes the first temporary parking point and the target parking space of the first vehicle.

In a possible implementation, the first temporary parking point or the first temporary parking space is located in a first position set, and there is at least one feasible path between any position included in the first position set and the target parking space of the first vehicle.

In a possible implementation, a distance between the any position included in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the any position included in the first position set is associated with point cloud data and/or road topology data of a high-definition map.

In a possible implementation, the vehicle information and/or the operation task information include/includes the point cloud data and/or the road topology data of the high-definition map, the first information includes the first temporary parking point, and the determining the first information based on vehicle information of a second vehicle and/or operation task information of the second vehicle includes:
obtaining a first position set based on the point cloud data and/or the road topology data, where there is at least one feasible path between any position included in the first position set and the target parking space of the first vehicle.

The first information is included in the first position set.

In a possible implementation, a distance between the any position in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the first temporary parking point or the first temporary parking space corresponds to a first sequence, and the first sequence represents a scheduling order of the first vehicle.

In a possible implementation, before sending the first information, the apparatus further includes:
a first receiving module, configured to receive request information of the first vehicle, where the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

In a possible implementation, the apparatus further includes:
a second receiving module, configured to receive acknowledgment information of the first vehicle, where the acknowledgment information indicates that the first vehicle arrives at the first temporary parking point or arrives at the first temporary parking space.

In a possible implementation, the apparatus further includes:
a second determining module, configured to determine M temporary parking spaces, where the M temporary parking spaces correspond to a first task, the first task is at least an operation task to be executed by the first vehicle, the M temporary parking spaces include the first temporary parking space, and M is an integer greater than 1.

In a possible implementation, the apparatus further includes:
a third determining module, configured to determine the first temporary parking space or the first temporary parking point based on at least one of M, a quantity of vehicles executing the first task, and position information of N temporary parking spaces in the M temporary parking spaces, and position information of the first vehicle, where N is an integer greater than or equal to 1 and less than or equal to M.

In a possible implementation, the M temporary parking spaces correspond to the first sequence, the first sequence includes M numbers, the M numbers are in a one-to-one correspondence with the M temporary parking spaces, and each number in the M numbers represents a scheduling order of a temporary parking space corresponding to the number.

In a possible implementation, the apparatus further includes:
a first sending module, configured to send second information to the first vehicle, where the second information indicates the first vehicle to display at least one of the following: the first temporary parking space, a number in the first sequence corresponding to the first temporary parking space, the M temporary parking spaces, a number in the first sequence corresponding to each of the M temporary parking spaces, the target parking space of the first vehicle, and the first trajectory.

In a possible implementation, the apparatus further includes:
a second sending module, configured to send a second temporary parking space to the first vehicle, where the second temporary parking space is located on the first trajectory, and the second temporary parking space is a parking space in a process in which the first vehicle travels from the first temporary parking space to the target parking space of the first vehicle.

In a possible implementation, the apparatus further includes:
a third sending module, configured to send third information to the first vehicle, where the third information indicates the first vehicle to display at least one of the following: the first temporary parking space, the target parking space of the first vehicle, and the first trajectory.

In a possible implementation, the apparatus further includes:
a fourth sending module, configured to send fourth information to the first vehicle, where the fourth information indicates a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

In a possible implementation, the first temporary parking space is a start position in which the first vehicle starts the automated valet parking.

In a possible implementation, the target parking space of the first vehicle is a parking space in which the first vehicle executes an operation task or an operation position of the first vehicle.

FIG. 7 is a block diagram of a parking apparatus according to an embodiment of this application. As shown in FIG. 7, the apparatus 700 may include:
a first receiving module 701, configured to receive first information, where the first information includes at least one of the following: a first temporary parking point, a first temporary parking space, or a first trajectory, where the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
a first traveling module 702, configured to travel to the target parking space of the first vehicle based on the first information.

In a possible implementation, the first information is determined based on vehicle information of a second vehicle and/or operation task information of the second vehicle, and the second vehicle is the first vehicle or a vehicle of a same type as the first vehicle.

In a possible implementation, the first temporary parking point or the first temporary parking space is determined based on an operation position of the second vehicle and/or an operation area of the second vehicle, and the operation position of the second vehicle and/or the operation area of the second vehicle are/is included in the operation task information of the second vehicle.

In a possible implementation, the vehicle information includes size information of the second vehicle, the operation task information includes the operation position of the second vehicle and/or the operation area of the second vehicle, the first temporary parking point is determined based on the operation position and/or the operation area, the first temporary parking space is determined based on the size information and the first temporary parking point, and the first temporary parking point is located in the first temporary parking space.

In a possible implementation, the operation task information includes the operation position of the second vehicle and/or the operation area of the second vehicle, the first temporary parking point is determined based on the operation position and/or the operation area, the first trajectory is determined based on the first temporary parking point, and the first trajectory includes the first temporary parking point and the target parking space of the first vehicle.

In a possible implementation, the first temporary parking point or the first temporary parking space is located in a first position set, and there is at least one feasible path between any position included in the first position set and the target parking space of the first vehicle.

In a possible implementation, a distance between the any position included in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the any position included in the first position set is associated with point cloud data and/or road topology data of a high-definition map.

In a possible implementation, the vehicle information and/or the operation task information include/includes the point cloud data and/or the road topology data of the high-definition map, the first information includes the first temporary parking point, the first information is included in the first position set, there is at least one feasible path between any position included in the first position set and the target parking space of the first vehicle, and the first position set is determined based on the point cloud data and/or a road topology data.

In a possible implementation, a distance between the any position in the first position set and the target parking space of the first vehicle is less than a first distance.

In a possible implementation, the any position included in the first position set is located in a temporary parking area.

In a possible implementation, a distance between the temporary parking area and the target parking space of the first vehicle is less than a second distance.

In a possible implementation, the first temporary parking point or the first temporary parking space corresponds to a first sequence, and the first sequence represents a scheduling order of the first vehicle.

In a possible implementation, before receiving the first information, the apparatus further includes:
a first sending module, configured to send request information, where the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

In a possible implementation, the apparatus further includes:
a second sending module, configured to send acknowledgment information, where the acknowledgment information indicates that the first vehicle arrives at the first temporary parking point or arrives at the first temporary parking space.

In a possible implementation, the apparatus further includes:
a second receiving module, configured to receive second information, where the second information indicates the first vehicle to display at least one of the following: the first temporary parking space, a number in the first sequence corresponding to the first temporary parking space, M temporary parking spaces, a number in the first sequence corresponding to each of the M temporary parking spaces, the target parking space of the first vehicle, and the first trajectory.

The M temporary parking spaces correspond to a first task, the first task is at least an operation task to be executed by the first vehicle, the M temporary parking spaces include the first temporary parking space, and M is an integer greater than 1. The M temporary parking spaces correspond to the first sequence, the first sequence includes M numbers, the M numbers are in a one-to-one correspondence with the M temporary parking spaces, and each number in the M numbers represents a scheduling order of a temporary parking space corresponding to the number.

In a possible implementation, the apparatus further includes:
a third receiving module, configured to receive a second temporary parking space, where the second temporary parking space is located on the first trajectory, and the second temporary parking space is a parking space in a process in which the first vehicle travels from the first temporary parking space to the target parking space of the first vehicle.

In a possible implementation, the apparatus further includes:
a fourth receiving module, configured to receive third information, where the third information indicates the first vehicle to display at least one of the following: the first temporary parking space, the target parking space, and the first trajectory.

In a possible implementation, the apparatus further includes:
a fifth receiving module, configured to receive fourth information, where the fourth information indicates a working mode in which the first vehicle arrives at the target parking space of the first vehicle, the working mode includes a first mode or a second mode, the first mode represents that the first vehicle arrives at the target parking space of the first vehicle through automated valet parking, and the second mode represents that the first vehicle arrives at the target parking space of the first vehicle along the first trajectory.

In a possible implementation, the first temporary parking space is a start position in which the first vehicle starts the automated valet parking.

In a possible implementation, the target parking space of the first vehicle is a parking space in which the first vehicle executes an operation task or an operation position of the first vehicle.

An embodiment of this application provides an electronic device, including a processor and a memory configured to store instructions executable by the processor, where the processor is configured to implement the foregoing method when executing the instructions.

An embodiment of this application provides a vehicle, including the apparatus shown in FIG. 7.

An embodiment of this application provides a nonvolatile computer-readable storage medium. The nonvolatile computer-readable storage medium stores computer program instructions. When the computer program instructions are executed by a processor, the foregoing method is implemented.

An embodiment of this application provides a computer program product, including computer-readable code or a nonvolatile computer-readable storage medium carrying computer-readable code. When the computer-readable code is run on a processor in an electronic device, the processor in the electronic device performs the foregoing method.

The computer-readable storage medium can be a tangible device that can retain and store instructions for use by an instruction execution device. The computer-readable storage medium may be, for example, (but is not limited to) an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only Memory, EPROM, or a flash memory), a static random access memory (Static Random Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punched card or a groove protrusion structure that stores instructions, and any suitable combination thereof.

Computer-readable program instructions or code described herein can be downloaded to respective computing/processing devices from a computer-readable storage medium, or downloaded to an external computer or external storage device over a network, such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives the computer-readable program instructions from the network, and forwards the computer-readable program instructions for storage in the computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include an object-oriented programming language like Smalltalk and C++, and a conventional procedural programming language like a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer over any kind of network, including a local area network (Local Area Network, LAN) or a wide area network (Wide Area Network, WAN), or may be connected to an external computer (for example, connected over the Internet by using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that, each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that when the instructions are executed by the processor of the computer or the another programmable data processing apparatus, an apparatus for implementing functions/acts specified in one or more blocks in the flowcharts and/or block diagrams is generated. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that, each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or act, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Without departing from the scope of the described embodiments, many modifications and variations are clear to a person of ordinary skill in the technical field. Selection of terms used in this specification is intended to best explain the principles of embodiments, actual application, or improvements to technologies in the market, or to enable another person of ordinary skill in the art to understand embodiments disclosed in this specification.

## Claims

1. A parking method, wherein the method comprises:
determining first information, wherein the first information comprises information associated with a first temporary parking space, and the information associated with the first temporary parking space comprises at least one of the following: a first temporary parking point, the first temporary parking space, or a first trajectory, wherein the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
sending the first information to the first vehicle.

2. The method according to claim 1, wherein the determining first information comprises:
determining the first information based on vehicle information of a second vehicle and/or operation task information of the second vehicle, wherein the second vehicle is the first vehicle or a vehicle of a same type as the first vehicle.

3. The method according to claim 2, wherein the method further comprises:
obtaining the vehicle information and/or the operation task information.

4. The method according to claim 2 or 3, wherein the determining the first information based on vehicle information of a second vehicle and/or operation task information of the second vehicle comprises:
determining the first temporary parking point or the first temporary parking space based on an operation position of the second vehicle and/or an operation area of the second vehicle, wherein the operation position of the second vehicle and/or the operation area of the second vehicle are/is comprised in the operation task information of the second vehicle.

5. The method according to claim 2 or 3, wherein the vehicle information comprises size information of the second vehicle, the operation task information comprises an operation position of the second vehicle and/or an operation area of the second vehicle, and the determining the first information based on vehicle information of a second vehicle and/or operation task information of the second vehicle comprises:
determining the first temporary parking point based on the operation position and/or the operation area; and
determining the first temporary parking space based on the size information and the first temporary parking point, wherein the first temporary parking point is located in the first temporary parking space.

6. The method according to any one of claims 2 to 5, wherein the operation task information comprises the operation position of the second vehicle and/or the operation area of the second vehicle, and the determining the first information based on vehicle information of a second vehicle and/or operation task information of the second vehicle comprises:
determining the first temporary parking point based on the operation position and/or the operation area; and
determining the first trajectory based on the first temporary parking point, wherein the first trajectory comprises the first temporary parking point and the target parking space of the first vehicle.

7. The method according to any one of claims 1 to 6, wherein
the first temporary parking point or the first temporary parking space is located in a first position set, and there is at least one feasible path between any position comprised in the first position set and the target parking space of the first vehicle.

8. The method according to claim 7, wherein
a distance between the any position comprised in the first position set and the target parking space of the first vehicle is less than a first distance.

9. The method according to claim 7 or 8, wherein
the any position comprised in the first position set is located in a temporary parking area.

10. The method according to claim 9, wherein a distance between the temporary parking area and the target parking space of the first vehicle is less than a second distance.

11. The method according to any one of claims 7 to 10, wherein
the any position comprised in the first position set is associated with point cloud data and/or road topology data of a high-definition map.

12. The method according to claim 2 or 3, wherein the vehicle information and/or the operation task information comprise/comprises point cloud data and/or road topology data of a high-definition map, and the first information comprises the first temporary parking point;
the determining the first information based on vehicle information of a second vehicle and/or operation task information of the second vehicle comprises:
obtaining a first position set based on the point cloud data and/or the road topology data, wherein there is at least one feasible path between any position comprised in the first position set and the target parking space of the first vehicle; and
the first information is comprised in the first position set.

13. The method according to claim 12, wherein a distance between the any position in the first position set and the target parking space of the first vehicle is less than a first distance.

14. The method according to claim 12 or 13, wherein the any position comprised in the first position set is located in a temporary parking area.

15. The method according to claim 14, wherein a distance between the temporary parking area and the target parking space of the first vehicle is less than a second distance.

16. The method according to any one of claims 1 to 15, wherein the first temporary parking point or the first temporary parking space corresponds to a first sequence, and the first sequence represents a scheduling order of the first vehicle.

17. The method according to any one of claims 1 to 16, wherein before the sending the first information, the method further comprises:
receiving request information of the first vehicle, wherein the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

18. The method according to any one of claims 1 to 17, wherein after the sending the first information, the method further comprises:
receiving acknowledgment information of the first vehicle, wherein the acknowledgment information indicates that the first vehicle arrives at the first temporary parking point or arrives at the first temporary parking space.

19. The method according to any one of claims 1 to 18, wherein the method further comprises:
determining M temporary parking spaces, wherein the M temporary parking spaces correspond to a first task, the first task is at least an operation task to be executed by the first vehicle, the M temporary parking spaces comprise the first temporary parking space, and M is an integer greater than 1.

20. The method according to claim 19, wherein the method further comprises:
determining the first temporary parking space or the first temporary parking point based on at least one of M, a quantity of vehicles executing the first task, and position information of N temporary parking spaces in the M temporary parking spaces, and position information of the first vehicle, wherein N is an integer greater than or equal to 1 and less than or equal to M.

21. The method according to claim 19 or 20, wherein the M temporary parking spaces correspond to the first sequence, the first sequence comprises M numbers, the M numbers are in a one-to-one correspondence with the M temporary parking spaces, and each number in the M numbers represents a scheduling order of a temporary parking space corresponding to the number.

22. The method according to any one of claims 19 to 21, wherein the method further comprises: sending second information to the first vehicle, wherein the second information indicates the first vehicle to display at least one of the following: the first temporary parking space, a number in the first sequence corresponding to the first temporary parking space, the M temporary parking spaces, a number in the first sequence corresponding to each of the M temporary parking spaces, the target parking space of the first vehicle, and the first trajectory.

23. The method according to any one of claims 19 to 22, wherein the method further comprises:
sending a second temporary parking space to the first vehicle, wherein the second temporary parking space is located on the first trajectory, and the second temporary parking space is a parking space in a process in which the first vehicle travels from the first temporary parking space to the target parking space of the first vehicle.

24. The method according to any one of claims 1 to 23, wherein the method further comprises:
sending third information to the first vehicle, wherein the third information indicates the first vehicle to display at least one of the following: the first temporary parking space, the target parking space of the first vehicle, and the first trajectory.

25. The method according to any one of claims 1 to 24, wherein the method further comprises:
sending fourth information to the first vehicle, wherein the fourth information indicates a working mode in which the first vehicle arrives at the target parking space of the first vehicle, the working mode comprises a first mode or a second mode, the first mode represents that the first vehicle arrives at the target parking space of the first vehicle through automated valet parking, and the second mode represents that the first vehicle arrives at the target parking space of the first vehicle along the first trajectory.

26. The method according to claim 25, wherein the first temporary parking space is a start position in which the first vehicle starts the automated valet parking.

27. The method according to any one of claims 1 to 26, wherein the target parking space of the first vehicle is a parking space in which the first vehicle executes an operation task or an operation position of the first vehicle.

28. A parking method, wherein the method comprises:
receiving first information, wherein the first information comprises information associated with a first temporary parking space, and the information associated with the first temporary parking space comprises at least one of the following: a first temporary parking point, the first temporary parking space, or a first trajectory, wherein the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
traveling to the target parking space of the first vehicle based on the first information.

29. The method according to claim 28, wherein the first information is determined based on vehicle information of a second vehicle and/or operation task information of the second vehicle, and the second vehicle is the first vehicle or a vehicle of a same type as the first vehicle.

30. The method according to claim 29, wherein the first temporary parking point or the first temporary parking space is determined based on an operation position of the second vehicle and/or an operation area of the second vehicle, and the operation position of the second vehicle and/or the operation area of the second vehicle are/is comprised in the operation task information of the second vehicle.

31. The method according to claim 29, wherein the vehicle information comprises size information of the second vehicle, the operation task information comprises an operation position of the second vehicle and/or an operation area of the second vehicle, the first temporary parking point is determined based on the operation position and/or the operation area, the first temporary parking space is determined based on the size information and the first temporary parking point, and the first temporary parking point is located in the first temporary parking space.

32. The method according to any one of claims 29 to 31, wherein the operation task information comprises the operation position of the second vehicle and/or the operation area of the second vehicle, the first temporary parking point is determined based on the operation position and/or the operation area, the first trajectory is determined based on the first temporary parking point, and the first trajectory comprises the first temporary parking point and the target parking space of the first vehicle.

33. The method according to any one of claims 28 to 32, wherein the first temporary parking point or the first temporary parking space is located in a first position set, and there is at least one feasible path between any position comprised in the first position set and the target parking space of the first vehicle.

34. The method according to claim 33, wherein a distance between the any position comprised in the first position set and the target parking space of the first vehicle is less than a first distance.

35. The method according to claim 33 or 34, wherein the any position comprised in the first position set is located in a temporary parking area.

36. The method according to claim 35, wherein a distance between the temporary parking area and the target parking space of the first vehicle is less than a second distance.

37. The method according to any one of claims 33 to 36, wherein the any position comprised in the first position set is associated with point cloud data and/or road topology data of a high-definition map.

38. The method according to claim 29, wherein the vehicle information and/or the operation task information comprise/comprises point cloud data and/or road topology data of a high-definition map, the first information comprises the first temporary parking point, the first information is comprised in a first position set, there is at least one feasible path between any position comprised in the first position set and the target parking space of the first vehicle, and the first position set is determined based on the point cloud data and/or a road topology data.

39. The method according to claim 38, wherein a distance between the any position in the first position set and the target parking space of the first vehicle is less than a first distance.

40. The method according to claim 38 or 39, wherein the any position comprised in the first position set is located in a temporary parking area.

41. The method according to claim 40, wherein a distance between the temporary parking area and the target parking space of the first vehicle is less than a second distance.

42. The method according to any one of claims 28 to 41, wherein the first temporary parking point or the first temporary parking space corresponds to a first sequence, and the first sequence represents a scheduling order of the first vehicle.

43. The method according to any one of claims 28 to 42, wherein before the receiving first information, the method further comprises:
sending request information, wherein the request information is used to request at least one of the following: a parking point of the first vehicle, a parking space of the first vehicle, a movement trajectory of the first vehicle traveling from the parking point of the first vehicle to the target parking space of the first vehicle, and a movement trajectory of the first vehicle traveling from the parking space of the first vehicle to the target parking space of the first vehicle.

44. The method according to any one of claims 28 to 43, wherein after the receiving first information, the method further comprises:
sending acknowledgment information, wherein the acknowledgment information indicates that the first vehicle arrives at the first temporary parking point or arrives at the first temporary parking space.

45. The method according to any one of claims 28 to 44, wherein the method further comprises:
receiving second information, wherein the second information indicates the first vehicle to display at least one of the following: the first temporary parking space, a number in the first sequence corresponding to the first temporary parking space, M temporary parking spaces, a number in the first sequence corresponding to each of the M temporary parking spaces, the target parking space of the first vehicle, and the first trajectory, wherein
the M temporary parking spaces correspond to a first task, the first task is at least an operation task to be executed by the first vehicle, the M temporary parking spaces comprise the first temporary parking space, and M is an integer greater than 1; and the M temporary parking spaces correspond to the first sequence, the first sequence comprises M numbers, the M numbers are in a one-to-one correspondence with the M temporary parking spaces, and each number in the M numbers represents a scheduling order of a temporary parking space corresponding to the number.

46. The method according to any one of claims 28 to 45, wherein the method further comprises:
receiving a second temporary parking space, wherein the second temporary parking space is located on the first trajectory, and the second temporary parking space is a parking space in a process in which the first vehicle travels from the first temporary parking space to the target parking space of the first vehicle.

47. The method according to any one of claims 28 to 46, wherein the method further comprises:
receiving third information, wherein the third information indicates the first vehicle to display at least one of the following: the first temporary parking space, the target parking space, and the first trajectory.

48. The method according to any one of claims 28 to 47, wherein the method further comprises:
receiving fourth information, wherein the fourth information indicates a working mode in which the first vehicle arrives at the target parking space of the first vehicle, the working mode comprises a first mode or a second mode, the first mode represents that the first vehicle arrives at the target parking space of the first vehicle through automated valet parking, and the second mode represents that the first vehicle arrives at the target parking space of the first vehicle along the first trajectory.

49. The method according to claim 48, wherein the first temporary parking space is a start position in which the first vehicle starts the automated valet parking.

50. The method according to any one of claims 28 to 49, wherein the target parking space of the first vehicle is a parking space in which the first vehicle executes an operation task or an operation position of the first vehicle.

51. A parking apparatus, wherein the apparatus comprises:
a first determining module, configured to determine first information, wherein the first information comprises at least one of the following: a first temporary parking point, a first temporary parking space, or a first trajectory, wherein the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
a first sending module, configured to send the first information to the first vehicle.

52. A parking apparatus, wherein the apparatus comprises:
a first receiving module, configured to receive first information, wherein the first information comprises at least one of the following: a first temporary parking point, a first temporary parking space, or a first trajectory, wherein the first temporary parking point is a parking point in a process in which a first vehicle travels from a current position to a target parking space, the first temporary parking space is a parking space in the process in which the first vehicle travels from the current position to the target parking space, and the first trajectory is a movement trajectory between the first temporary parking space or the first temporary parking point and the target parking space of the first vehicle; and
a first traveling module, configured to travel to the target parking space of the first vehicle based on the first information.

53. An electronic device, comprising:
a processor; and
a memory configured to store instructions executable by the processor, wherein
the processor is configured to implement the method according to any one of claims 1 to 27 when executing the instructions.

54. An electronic device, comprising:
a processor; and
a memory configured to store instructions executable by the processor, wherein
the processor is configured to implement the method according to any one of claims 28 to 50 when executing the instructions.

55. A nonvolatile computer-readable storage medium, wherein the nonvolatile computer-readable storage medium stores computer program instructions, and when the computer program instructions are executed by a processor, the method according to any one of claims 1 to 27 or the method according to any one of claims 28 to 50 is implemented.

56. A computer program product, comprising computer-readable code or a nonvolatile computer-readable storage medium carrying computer-readable code, wherein when the computer-readable code is run on an electronic device, a processor in the electronic device performs the method according to any one of claims 1 to 28, or implements the method according to any one of claims 28 to 50.

57. A vehicle, comprising the parking apparatus according to claim 52 or the electronic device according to claim 54.
